(19) Europäisches Patentamt
European Patent Office
Office européen des brevets

(11) Veröffentlichungsnummer: **0 107 615 B1**

# (12) EUROPÄISCHE PATENTSCHRIFT

(45) Veröffentlichungstag der Patentschrift: **28.10.92**

(51) Int. Cl.⁵: **C08K 5/34**, C08L 23/02

(21) Anmeldenummer: **83810428.9**

(22) Anmeldetag: **26.09.83**

Teilanmeldung 87100798 eingereicht am 21.01.87.

Die Akte enthält technische Angaben, die nach dem Eingang der Anmeldung eingereicht wurden und die nicht in dieser Patentschrift enthalten sind.

## (54) Mit Bis- oder Tris-(polyalkylpiperidinyl-amino)-1,3,5-triazine stabilisierte Polyolefine.

(30) Priorität: **30.09.82 CH 5756/82**

(43) Veröffentlichungstag der Anmeldung:
**02.05.84 Patentblatt 84/18**

(45) Bekanntmachung des Hinweises auf die Patenterteilung:
**28.10.92 Patentblatt 92/44**

(84) Benannte Vertragsstaaten:
**DE FR GB IT NL**

(56) Entgegenhaltungen:
**DE-C- 2 319 816**

(73) Patentinhaber: **CIBA-GEIGY AG**
**Klybeckstrasse 141**
**CH-4002 Basel(CH)**

(72) Erfinder: **Rody, Jean, Dr.**
**Rütiring 82**
**CH-4125 Riehen(CH)**
Erfinder: **Gugumus, François, Dr.**
**Burgfeldermattweg 17**
**CH-4123 Allschwil(CH)**

(74) Vertreter: **Klingseisen, Franz, Dipl.-Ing. et al**
**Dr. F. Zumstein Dipl.-Ing. F. Klingseisen**
**Bräuhausstrasse 4**
**W-8000 München 2(DE)**

EP 0 107 615 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft die Stabilisierung von Polyolefinen gegen den lichtinduzierten und oxidativen Abbau durch Zugabe einer zur Verhinderung des Abbaus ausreichenden Menge eines bestimmten Tris-(polyalkylpiperidinyl-tert.-amino)-1,3,5-triazins.

In der DE 23 19 816 ist bereits die Stabilisierung von synthetischen Polymeren durch Zugabe von Mono-, Bis- und Tris-(polyalkylpiperidinyl-amino)-1,3,5-triazinen beschrieben, wobei es sich bei "-amino-" um sekundäres und tertiäres Amino handelt.

Es hat sich nun gezeigt, dass analoge Tris-(polyalkylpiperidinyl-amino)-1,3,5-triazine, bei denen das Stickstoffatom in der Polyalkylpiperidinylgruppe als tertiäres Amin vorliegt und gleichzeitig "-amino-" ein tertiäres Amino darstellt, eine überraschend bessere Stabilisierung von Polyolefinen gewährleisten.

Die vorliegende Erfindung betrifft demnach

Polyolefine enthaltend als Stabilisator gegen lichtinduzierten und oxidativen Abbau eine Verbindung der Formel I

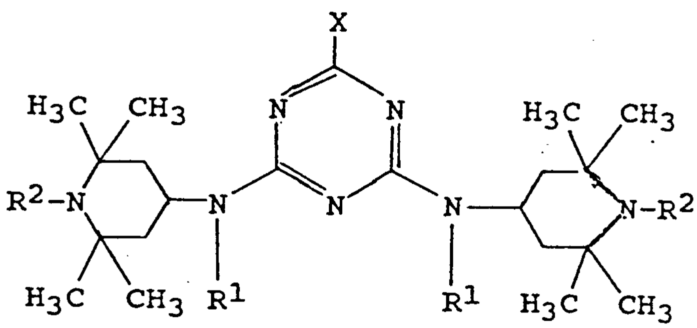

(I)

worin X eine Gruppe

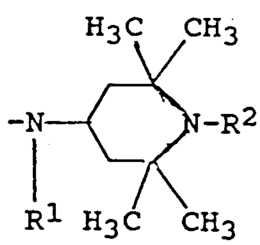

ist,

$R^1$ $C_1$-$C_{18}$ Alkyl, $C_5$-$C_{12}$ Cycloalkyl, $C_7$-$C_{11}$ Aralkyl, durch -O- oder -N($R^3$)- unterbrochenes $C_3$-$C_{12}$ Alkyl, $C_2$-$C_6$ Carboxyalkyl, $C_3$-$C_{12}$-Alkoxycarbonylalkyl, eine Gruppe -A-O-Q, worin A Methylen, Ethylen oder Trimethylen und Q ein-, zwei- oder dreimal durch $C_1$-$C_4$ Alkyl substituiertes oder unsubstituiertes Phenyl sind oder eine Gruppe der Formel

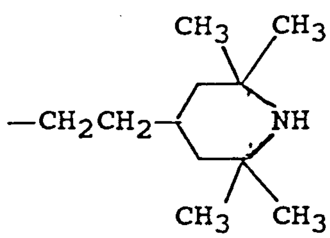

bedeutet,

$R^2$ $C_1$-$C_4$ Alkyl, Benzyl, Allyl, Acetyl, Acryloyl, Oxyl oder eine Gruppe -$CH_2$-$CH(R^4)OH$,

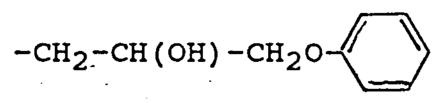

oder -$CH_2CN$ ist,

$R^3$ $C_1$-$C_4$ Alkyl und $R^4$ Wasserstoff, Methyl, Ethyl oder Phenyl bedeuten, wobei für den Fall, daß $R^1$ $C_1$-$C_{18}$-Alkyl oder $C_7$-$C_{11}$-Aralkyl bedeutet, $R^2$ nicht für $C_1$-$C_4$-Alkyl, Benzyl, Allyl, Oxyl und nicht für -$CH_2$-$CH(R^4)OH$ mit den Bedeutungen $R^4$ = Wasserstoff, Methyl oder Phenyl steht, oder Tris-(1,2,2,6,6-pentamethyl-4-piperidyl-butylamino)-1,3,5-triazin, Tris-(1-allyl-2,2,6,6-tetramethyl-4-piperidyl-butylamino)-1,3,5-triazin, Tris-(1-benzyl-2,2,6,6-tetramethyl-4-piperidyl-butylamino)-1,3,5-triazin, Tris-(1-$\beta$-hydroxyethyl-2,2,6,6-tetramethyl-4-piperidyl-butylamino)-1,3,5-triazin oder Tris-(1-$\beta$-hydroxypropyl-2,2,6,6-tetramethyl-4-piperidyl-ethylamino)-1,3,5-triazin.

Bedeuten etwaige Substituenten Alkyl, so handelt es sich um geradkettige oder verzweigte Alkylgruppen. Bedeuten sie $C_1$-$C_4$ Alkyl, dann handelt es sich z.B. um Methyl, Ethyl, n-Propyl, Isopropyl, n-Butyl, sec.-Butyl oder tert.-Butyl. Bedeuten sie $C_1$-$C_{18}$ Alkyl, so kommen zusätzlich z.B. n-Pentyl, 2,2-Dimethylpropyl, n-Hexyl, 2,3-Dimethyl-butyl, n-Octyl, 1,1,3,3-Tetramethylbutyl, n-Nonyl, Decyl, Dodecyl, Tetradecyl, Hexadecyl, Heptadecyl oder Octadecyl in Frage.

Bedeuten etwaige Substituenten $C_5$-$C_{12}$ Cycloalkyl, so handelt es sich beispielsweise um Cyclopentyl, Cyclohexyl, Cyclooctyl, Cyclodecyl, Cyclododecyl. Bevorzugt ist Cyclohexyl.

Bedeuten etwaige Substituenten $C_7$-$C_{11}$ Aralkyl, so handelt es sich zum Beispiel um Phenalkyl oder Naphthalkyl, wobei der Alkylteil bei Phenalkyl jeweils aus verzweigtem oder unverzweigtem $C_1$-$C_4$ Alkyl besteht. Bevorzugte Phenalkylreste sind $\alpha,\alpha$-Dimethylbenzyl, 1-Phenylethyl, 2-Phenylethyl und Benzyl. Beispiele für Naphthylalkylreste sind 1-Naphthylmethyl und 2-Naphthylmethyl. Bevorzugt ist Benzyl.

Beispiele für durch -O- oder -$N(R^3)$- unterbrochenes $C_3$-$C_{12}$ Alkyl sind 2-Methoxyethyl-, 2-Ethoxyethyl, 2-n-Propoxyethyl, 2-Isopropoxyethyl, 3-Methoxypropyl, 3-Ethoxypropyl, 4-Methoxybutyl, 6-Ethoxyhexyl, 10-Ethoxydecyl, 2-Dimethylaminoethyl, 2-Diethylaminoethyl, 3-Dimethylaminopropyl, 3-Diethylaminopropyl, 3-Di-isopropylamino-propyl, 3-Di-n-butylaminopropyl.

Beispiele für die Gruppe -A-O-Q sind
2-(4-Methyl-phenoxy)ethyl, 3-(4-Methyl-phenoxy)propyl, 3-(4-tert.-Butyl-phenoxy)propyl, 3-(2,4,6-Trimethyl-phenoxy)propyl, 3-(2,4-Di-tert`-butyl-phenoxy)propyl, (2,4,6-trimethyl-phenoxy)methyl.

Bedeutet $R^1$ $C_2$-$C_6$ Carboxyalkyl, so handelt es sich z.B. um Carboxymethyl, Carboxyethyl, Carboxypropyl, Carboxybutyl, Carboxypentyl.

Bedeutet $R^1$ $C_3$-$C_{12}$ Alkoxycarbonylalkyl, dann handelt es
sich beispielsweise um Methoxycarbonylmethyl, Ethoxycarbonylmethyl, Propoxycarbonylmethyl, Butoxycarbonylmethyl, Octyloxycarbonylmethyl, Decyloxycarbonylmethyl, Methoxycarbonylethyl, Ethoxycarbonylethyl, Propoxycarbonylethyl, Butoxycarbonylethyl, Methoxycarbonylpropyl, Ethoxycarbonylpropyl,Methoxycarbonylbutyl, Ethoxycarbonylbutyl.

Von besonderem Interesse sind Polyolefine enthaltend eine Verbindung der Formel I, worin
X

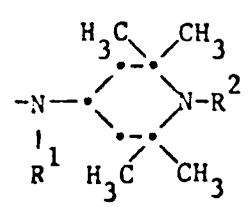

ist,
$R^1$, Cyclohexyl, Benzyl und
$R^2$ $C_1$-$C_4$ Alkyl, Benzyl, Allyl, $C_2$-$C_3$ Hydroxyalkyl bedeuten.
Weitere bevorzugte Ausführungsformen gehen aus den Patentansprüchen hervor.

Erfindungsgemäss einzusetzende Verbindungen der Formel I, worin $R^1$ $C_4$-$C_{18}$ Alkyl, insbesondere n-Butyl, bedeutet sind bevorzugt.

Die Herstellung der erfindungsgemäss als Stabilisatoren einzusetzenden Verbindungen erfolgt in Analogie zu an sich bekannten Verfahren, wie sie z.B. in der DE-OS 23 19 816 beschrieben sind. Die Ausgangsprodukte sind bekannt.

Beispiele für erfindungsgemäss mit Verbindungen der Formel I zu stabilisierende Polyolefine sind:

1. Polymere von Mono- und Diolefinen, beispielsweise Polyäthylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z.B. von Cyclopenten oder Norbornen. Polyäthylen von hoher oder niedriger Dichte und Polypropylen werden bevorzugt.

2. Mischungen der unter 1) genannten Polymeren, z.B. Mischungen von Polypropylen mit Polyäthylen oder mit Polyisobutylen.

3. Copolymere von Mono- und Diolefinen untereinander oder mit anderen Vinylmonomeren, wie z.B. Aethylen-Propylen-Copolymere, Propylen-Buten-1-Copolymere, Propylen-Isobutylen-Copolymere, Aethylen-Buten-1-Copolymere, Propylen-Butadien-Copolymere, Isobutylen-Isopren-Copolymere, Aethylen-Alkylacrylat-Copolymere, Aethylen-Alkylmethacrylat -Copolymere, Aethylen-Vinylacetat-Copolymere oder Aethylen-Acrylsäure-Copolymere und deren Salze (Ionomere), sowie Terpolymere von Aethylen mit Propylen und einem Dien, wie Hexadien, Dicyclopentadien oder Aethylidennorbornen.

Die Stabilisatoren werden den Kunststoffen in einer Konzentration von 0,01 bis 5 Gew.-%, berechnet auf das zu stabilisierende Material, zugesetzt. Vorzugsweise werden 0,03 bis 1,5, besonders bevorzugt 0,2 bis 0,6 Gew.-% der Verbindungen, berechnet auf das zu stabilisierende Material, in dieses eingearbeitet.

Die Einarbeitung kann nach der Polymerisation erfolgen, beispielsweise durch Einmischen der Verbindungen und gegebenenfalls weiterer Additive in die Schmelze nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels.

Die Erfindung betrifft daher auch die durch Zusatz von 0,01 bis 5 Gew.-% einer Verbindung der Formel I stabilisierten Kunststoffe, die gegebenenfalls noch andere bekannte und übliche Zusätze enthalten können. Die so stabilisierten Kunststoffe können in verschiedenster Form angewendet werden z.B. als Folien, Fasern, Bändchen oder Profile.

Als weitere Additive, mit denen zusammen die erfindungsgemäss verwendbaren Stabilisatoren eingesetzt werden können, sind beispielsweise zu nennen:

1. Antioxidantien

1.1. Alkylierte Monophenole

2,6-Di-tert.-butyl-4-methylphenol
2-tert.-Butyl-4,6-dimethylphenol
2,6-Di-tert.-butyl-4-äthylphenol
2,6-Di-tert.-butyl-4-n-butylphenol
2,6-Di-tert.-butyl-4-i-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert.-butyl-4-methoxymethylphenol

1.2. Alkylierte Hydrochinone

2,6-Di-tert.-butyl-4-methoxyphenol
2,5-Di-tert.-butyl-hydrochinon
2,5-Di-tert.-amyl-hydrochinon
2,6-Diphenyl-4-octadecyloxyphenol

1.3. Hydroxylierte Thiodiphenyläther

2,2'-Thio-bis-(6-tert.butyl-4-methylphenol)
2,2'-Thio-bis-(4-octylphenol)
4,4'-Thio-bis-(6-tert.butyl-3-methylphenol)
4,4'-Thio-bis-(6-tert.butyl-2-methylphenol)

1.4. Alkyliden-Bisphenole

2,2'-Methylen-bis-(6-tert.butyl-4-methylphenol)
2,2'-Methylen-bis-(6-tert.butyl-4-äthylphenol)
2,2'-Methylen-bis-[4-methyl-6-(α-methylcyclohexyl)-phenol]
2,2'-Methylen-bis-(4-methyl-6-cyclohexylphenol)
2,2'-Methylen-bis-(6-nonyl-4-methylphenol)
2,2'-Methylen-bis-(4,6-di-tert.butylphenol)

2,2'-Aethyliden-bis-(4,6-di-tert.butylphenol)
2,2'-Aethyliden-bis-(6-tert.butyl-4-isobutylphenol)
4,4'-Methylen-bis-(2,6-di-tert.butylphenol)
4,4'-Methylen-bis-(6-tert.butyl-2-methylphenol)
1,1-Bis-(5-tert.butyl-4-hydroxy-2-methylphenyl)-butan
2,6-Di-(3-tert.butyl-5-methyl-2-hydroxybenzyl)-4-methylphenol
1,1,3-Tris-(5-tert.butyl-4-hydroxy-2-methylphenyl)-butan
1,1-Bis-(5-tert.butyl-4-hydroxy-2-methylphenyl)-3-n-dodecylmercapto-butan
Aethylenglycol-bis-[3,3-bis-(3'-tert.butyl-4'-hydroxyphenyl)-butyrat]
Di-(3-tert.butyl-4-hydroxy-5-methylphenyl)-dicyclopentadien
Di-[2-(3'-tert.butyl-2'-hydroxy-5'-methyl-benzyl)-6-tert.butyl-4-methyl-phenyl]-terephthalat.

1.5. Benzylverbindungen.

1,3,5-Tri-(3,5-di-tert.butyl-4-hydroxybenzyl)-2,4,6-trimethylbenzol
Di-(3,5-di-tert.butyl-4-hydroxybenzyl)-sulfid
3,5-ditert.butyl-4-hydroxybenzyl-mercaptoessigsäure-isooctylester
Bis-(4-tert.butyl-3-hydroxy-2,6-dimethylbenzyl)dithiol-terephthalat
1,3,5-Tris-(3,5-di-tert.butyl-4-hydroxybenzyl)-isocyanurat
1,3,5-Tris-(4-tert.butyl-3-hydroxy-2,6-dimethylbenzyl)-isocyanurat
3,5-Di-tert.butyl-4-hydroxybenzyl-phosphonsäure-dioctadecylester
3,5-Di-tert.butyl-4-hydroxybenzyl-phosphonsäure-monoäthylester, Calcium-salz.

1.6. Acylaminophenole

4-Hydroxy-laurinsäureanilid
4-Hydroxy-stearinsäureanilid
2,4-Bis-octylmercapto-6-(3,5-di-tert.butyl-4-hydroxyanilino)-s-triazin

1.7. Ester der $\beta$-(3,5-Di-tert.butyl-4-hydroxyphenyl)-propionsäure mit ein- oder mehrwertigen Alkoholen, wie z.B. mit

| | |
|---|---|
| Methanol | Diäthylenglycol |
| Octadecanol | Triäthylenglycol |
| 1,6-Hexandiol | Pentaerythrit |
| Neopentylglycol | Tris-hydroxyäthyl-isocyanurat |
| Thiodiäthylenglycol | Di-hydroxyäthyl-oxalsäurediamid |

1.8. Ester der $\beta$(5-tert.butyl-4-hydroxy-3-methylphenyl)-propionsäure mit ein- oder mehrwertigen Alkoholen, wie z.B. mit

| | |
|---|---|
| Methanol | Diäthylenglycol |
| Octadecanol | Triäthylenglycol |
| 1,6-Hexandiol | Pentaerythrit |
| Neopentylglycol | Tris-hydroxyäthyl-isocyanurat |
| Thiodiäthylenglycol | Di-hydroxyäthyl-oxalsäurediamid |

1.9. Amide der $\beta$-(3,5-Di-tert.butyl-4-hydroxyphenyl)-propionsäure, wie z.B.

N,N'-Di-(3,5-di-tert.butyl-4-hydroxyphenylpropionyl)-hexamethylen-diamin
N,N'-Di-(3,5-di-tert.butyl-4-hydroxyphenylpropionyl)-trimethylen-diamin
N,N'-Di-(3,5-di-tert.butyl-4-hydroxyphenylpropionyl)-hydrazin

2. UV-Absorber und Lichtschutzmittel

2.1. 2-(2'-Hydroxyphenyl)-benztriazole, wie z.B. das 5'-Methyl-, 3',5'-Di-tert.butyl-, 5'-Tert.butyl-, 5'-(1,1,3,3-Tetramethylbutyl)-,5-Chlor-3',5'-di-tert.butyl-, 5-Chlor-3'-tert.butyl-5'-methyl-,3'-sec.Butyl-5'-tert.butyl-, 4'-Octoxy-, 3',5'-Di-tert.amyl-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-Tert.butyl-phenylsalicylat,

Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butyl-phenylester.

2.4. Acrylate, wie z.B. α-Cyan-β,β-diphenylacrylsäure-ätyhylester bzw. -isooctylester, α-Carbomethoxy-zimtsäuremethylester, α-Cyano-β- methyl-p-methoxy-zimtsäuremethylester bzw. -butylester. α-Carbomethoxy-p-methoxy-zimtsäure-methylester.
N-(β-Carbomethoxy-β-cyanovinyl)-2-methyl-indolin.

2.5. Nickelverbindungen, wie z.B. Nickelkomplexe des 2,2'-Thio-bis-[4-(1,1,3,3-tetramethylbutyl)-phenols],wie der 1:1- oder der 1:2-Komplex, gegebenenfalls mit zusätzlichen Liganden wie n-Butylamin, Triäthanolamin oder N-Cyclohexyl-diäthanolamin, Nickeldibutyldithiocarbamat, Nickelsalze von 4-Hydroxy-3,5-di-tert.butylbenzyl-phosphonsäure-monoalkylestern wie vom Methyl- oder Aethylester, Nickelkomplexe von Ketoximen wie von 2-Hydroxy-4-methyl-phenyl-undecylketonoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis-(2,2,6,6-tetramethylpiperidyl)-sebacat
Bis-(1,2,2,6,6-pentamethylpiperidyl)-sebacat
n-Butyl-3,5-di-tert.butyl-4-hydroxybenzyl-malonsäure-bis(1,2,2,6,6-pentamethylpiperidyl)-ester, Kondensationsprodukt aus 1-Hydroxyäthyl-,2,2,6,6-Tetramethyl-4-hydroxypiperidin und Bernsteinsäure, Kondensationsprodukt aus N,N'-(2,2,6,6-Tetramethylpiperidyl)-hexamethylendiaminund 4-tert.octylamino-2,6-dichlor-1,3,5-s-triazin. Tris-(2,2,6,6-tetramethylpiperidyl)-nitrilotriacetat.

2.7. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Aethoxy-2'-äthyl-oxanilid, N,N'-Bis-(3-di-methylaminopropyl)-oxalamid, 2-Aethoxy-5-tert.butyl-2'-äthyl-oxanilid und dessen Gemisch mit 2-Aethoxy-2'-äthyl-5,4'-di-tert.butyl-oxanilid,Gemische von ortho- und para-Methoxy- sowie von o- und p-Aethoxy-disubstituierte Oxaniliden.

3. Metalldesaktivatoren, wie z.B. N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-triazol, Bis-benzyliden-oxalsäuredihydrazid.

4. Phosphite und Phosphonite, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythrit-diphosphit, Tris-(2,4-di-tert.butylphenyl)-phosphit, Diisodecylpentaerythrit-diphosphit, Di-(2,4-di-tert.butylphenyl)-pentaerythrit-diphosphit, Tristearyl-sorbit-triphosphit, Tetrakis-(2,4-di-tert. butylphenyl)-4,4'-biphenylen-diphosphonit.

5. Peroxidzerstörende Verbindungen, wie z.B. Ester der β-Thio-di-propionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk,Kaolin, Glimmer, Bariumsulfat, Metalloxide und-hydroxide, Russ, Graphit.

10. Sonstige Zusätze, wie z.B. Weichmacher,Gleitmittel, Emulgatoren, Pigmente, Optische Aufheller, Flammschutzmittel, Antistatika, Treibmittel.

Die Herstellung der erfindungsgemäss einzusetzenden Verbindungen wird in den folgenden Beispielen näher erläutert. Teile sind dabei Gewichtsteile.

Beispiel 1: 0,1 Mol 2-Chlor-4,6-bis-(1,2,2,6,6-pentamethyl-4-piperidyl-butylamino)-1,3,5-triazin werden mit 0,15 Mol (1,2,2,6,6-Pentamethyl-4-piperidyl)butylamin in 250 ml Xylol 16 Stunden unter Rückfluss gerührt. Nach dem Abkühlen auf Raumtemperatur gibt man 100 ml 2-n. Natronlauge hinzu, rührt kräftig während 15 Minuten und trennt dann die wässrige Phase ab. Die Xylollösung wird über Natriumsulfat getrocknet und im Vakuum eingedampft. Durch Kristallisation des erhaltenen Rückstandes aus Acetonitril erhält man das Tris-(1,2,2,6,6-pentamethyl-4-piperidyl-butylamino)-1,3,5-triazin mit Schmp. 154 °C.

Beispiele 2-8: Verfährt man in Analogie zu dem in Beispiel 1 beschriebenen Verfahren, so erhält man die in der nachfolgenden Tabelle I angegebenen Verbindungen.

Tabelle I

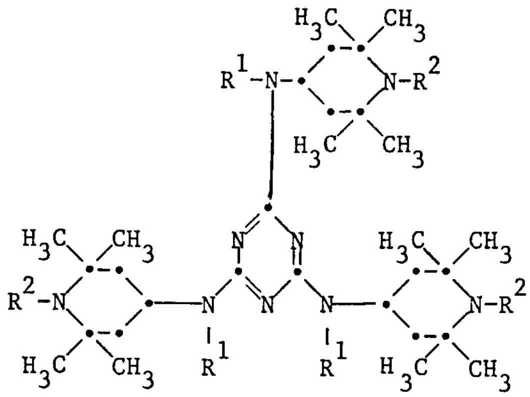

| Beispiel Nr. | $R^1$ | $R^2$ | Phys. Eig. |
|---|---|---|---|
| 2 | $-C_4H_9$ | $-CH_2CH=CH_2$ | F. 160-162°C |
| 3 | $-C_4H_9$ | $-CH_2-$ 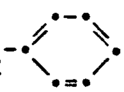 | F. 246-248°C |
| 4 | $-C_4H_9$ | $-COCH_3$ | F. 241-242°C |
| 5 | $-C_2H_5$ | $-CH_2-CH-OH$<br>\|<br>$CH_3$ | F. 226-227°C |
| 6 | $-C_4H_9$ | $-CH_2-CH_2-OH$ | F. 144-145°C |
| 7 | $-C_4H_9$ | $-CH_2-CH-CH_2-O-$ 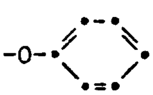<br>\|<br>OH | F. 60-62°C |
| 8 | $-C_4H_9$ | $-CH_2CN$ | F. 185-186°C |

**Patentansprüche**

1. Polyolefine enthaltend als Stabilisator gegen lichtinduzierten und oxidativen Abbau eine Verbindung der Formel I

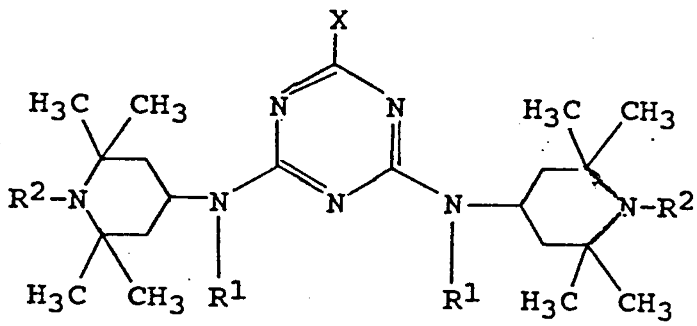

(I)

worin X eine Gruppe

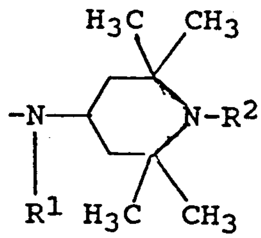

ist,

$R^1$ $C_1$-$C_{18}$ Alkyl, $C_5$-$C_{12}$ Cycloalkyl, $C_7$-$C_{11}$ Aralkyl, durch -O- oder -N($R^3$)- unterbrochenes $C_3$-$C_{12}$ Alkyl, $C_2$-$C_6$ Carboxyalxyl, $C_3$-$C_{12}$-Alkoxycarbonylalkyl, eine Gruppe -A-O-Q, worin A Methylen, Ethylen oder Trimethylen und Q ein-, zwei- oder dreimal durch $C_1$-$C_4$ Alkyl substituiertes oder unsubstituiertes Phenyl sind oder eine Gruppe der Formel

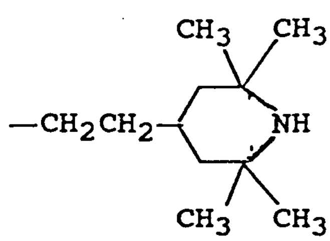

bedeutet,

$R^2$ $C_1$-$C_4$ Alkyl, Benzyl, Allyl, Acetyl, Acryloyl, Oxyl oder eine Gruppe

$-CH_2-CH(R^4)OH$,

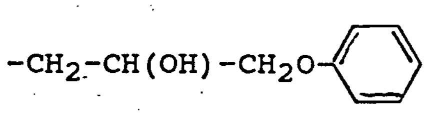

oder $-CH_2CN$ ist,

$R^3$ $C_1$-$C_4$ Alkyl und $R^4$ Wasserstoff, Methyl, Ethyl oder Phenyl bedeuten, wobei für den Fall, daß $R^1$ $C_1$-$C_{18}$-Alkyl oder $C_7$-$C_{11}$-Aralkyl bedeutet, $R^2$ nicht für $C_1$-$C_4$-Alkyl, Benzyl, Allyl, Oxyl und nicht für $-CH_2-CH(R^4)OH$ mit den Bedeutungen $R^4$ = Wasserstoff, Methyl oder Phenyl steht, oder Tris-(1,2,2,6,6-pentamethyl-4-piperidyl-butylamino)-1,3,5-triazin, Tris-(1-allyl-2,2,6,6-tetramethyl-4-piperidyl-butylamino)-1,3,5-triazin, Tris-(1-benzyl-2,2,6,6-tetramethyl-4-piperidyl-butylamino)-1,3,5-triazin, Tris-(1-$\beta$-hydroxyethyl-2,2,6,6-tetramethyl-4-piperidyl-butylamino)-1,3,5-triazin oder Tris-(1-β-hydroxypropyl-2,2,6,6-tetramethyl-4-piperidyl-ethylamino)-1,3,5-triazin.

**2.** Polyolefine gemäss Anspruch 1, dadurch gekennzeichnet, dass sie eine Verbindung der Formel I enthalten, worin $R^1$ $C_4$-$C_{18}$ Alkyl bedeutet.

**3.** Polyolefine gemäss Anspruch 1, dadurch gekennzeichnet, dass sie eine Verbindung der Formel I enthalten, worin $R^1$ n-Butyl ist.

**4.** Polyolefine gemäss Anspruch 1, dadurch gekennzeichnet, dass die Menge der Verbindung der Formel I in Bereich von 0,01 bis 5 Gewichts-%, bezogen auf das unbehandelte synthetische Polymere, liegt.

**5.** Polyolefine gemäss Anspruch 1, dadurch gekennzeichnet, dass das Polymere Polyethylen von hoher oder niedriger Dichte oder Polypropylen ist.

## Claims

**1.** A polyolefin containing, as the stabiliser against light-induced and oxidative degradation, a compound of the formula I

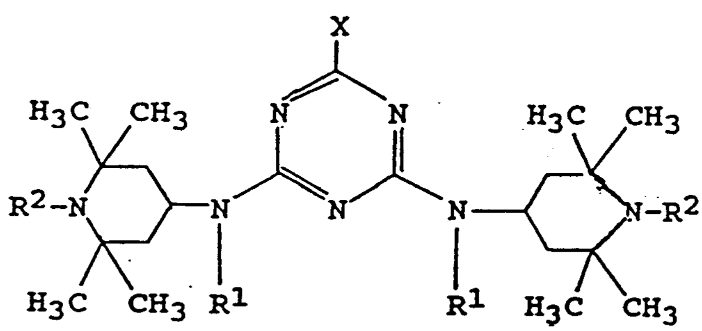

(I)

in which X is a group

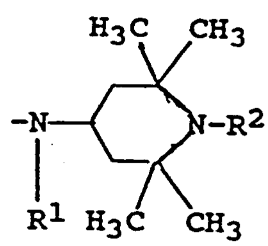

$R_1$ is $C_1$-$C_{18}$alkyl, $C_5$-$C_{12}$cycloalkyl, $C_7$-$C_{11}$aralkyl, $C_3$-$C_{12}$alkyl which is interrupted by -O- or -N($R^3$)-, $C_2$-$C_6$carboxyalkyl or $C_3$-$C_{12}$alkoxycarbonylalkyl or is a group -A-O-Q in which A is methylene, ethylene or trimethylene and Q is phenyl which is unsubstituted or monosubstituted, disubstituted or trisubstituted by $C_1$-$C_4$alkyl, or is a group of the formula

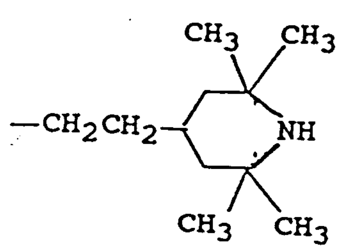

$R^2$ is $C_1$-$C_4$alkyl, benzyl, allyl, acetyl, acryloyl, oxyl or a group

-$CH_2$-CH($R^4$)OH,

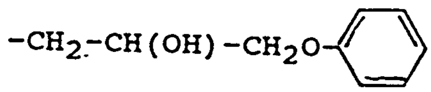

or -$CH_2$CN

$R^3$ is $C_1$-$C_4$alkyl and $R^4$ is hydrogen, methyl, ethyl or phenyl, where if $R^1$ is $C_1$-$C_{18}$alkyl or $C_7$-$C_{11}$aralkyl, $R^2$ is not $C_1$-$C_4$alkyl, benzyl, allyl, oxyl and is not -$CH_2$-CH($R^4$)OH where $R^4$ - hydrogen, methyl or phenyl, or tris-(1,2,2,6,6-pentamethyl-4-piperidylbutylamino)-1,3,5-triazine, tris(1-allyl-2,2,6,6-tetramethyl-4-piperidylbutylamino)-1,3,5-triazine, tris(1-benzyl-2,2,6,6-tetramethyl-4-piperidylbutylamino)-1,3,5-triazine, tris(1-β-hydroxyethyl-2,2,6,6-tetramethyl-4-piperidylbutylamino)-1,3,5-triazine or tris(1-β-hydroxypropyl-2,2,6,6-tetramethyl-4-piperidylethylamino)-1,3,5-triazine.

**2.** A polyolefin according to claim 1, which contains a compound of the formula I in which $R^1$ is $C_4$-$C_{18}$alkyl.

**3.** A polyolefin according to claim 1, which contains a compound of the formula I in which $R^1$ is n-butyl.

**4.** A polyolefin according to claim 1, wherein the quantity of the compound of the formula I is within the range from 0.01 to 5 % by weight, based on the untreated, synthetic polymer.

**5.** A polyolefin according to claim 1, the polymer being high-density or low-density polyethylene, or polypropylene.

## Revendications

**1.** Polyoléfines contenant comme stabilisants à l'encontre d'une dégradation induite par la lumière et d'une dégradation oxydante, un composé de formule I :

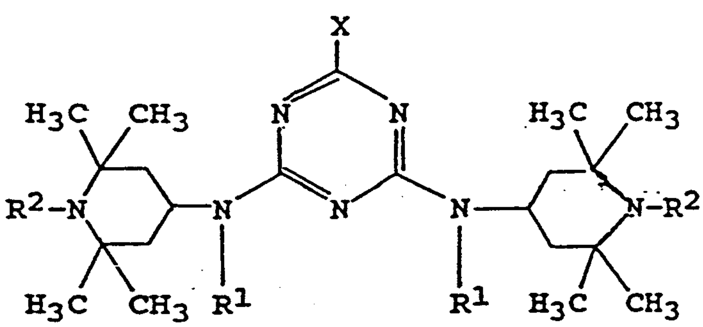

(I)

dans laquelle X représente un groupe :

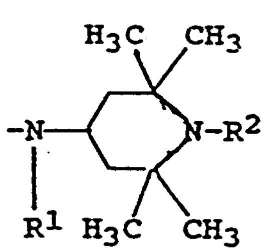

$R^1$ représente un groupe alkyle en $C_1$ à $C_{18}$, cycloalkyle en $C_5$ à $C_{12}$, aralkyle en $C_7$ à $C_{11}$, alkyle en $C_3$ à $C_{12}$ (interrompu par -O- ou par $-N(R^3)-$, un groupe carboxyalkyle en $C_2$ à $C_6$, un groupe alcoxycarbonylalkyle en $C_3$ à $C_{12}$, un groupe -A-O-Q, dans lequel A représente un groupe méthylène, éthylène ou triméthylène, et Q représente un groupe phényle (non substitué ou substitué une, deux ou trois fois par un groupe alkyle en $C_1$ à $C_4$) ou un groupe de formule :

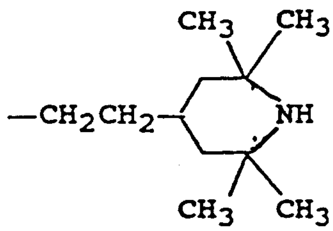

$R^2$ représente un groupe alkyle en $C_1$ à $C_4$, benzyle, allyle, acétyle, acryloyle, oxyle ou un groupe :

$-CH_2-CH(R^4)OH$,

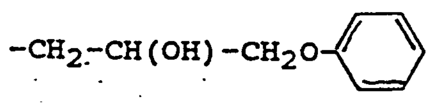

ou $-CH_2CN$ ,

$R^3$ représente un groupe alkyle en $C_1$ à $C_4$ et $R^4$ représente un atome d'hydrogène, un groupe méthyle, éthyle ou phényle, et, si $R^1$ représente un groupe alkyle en $C_1$ à $C_{18}$ ou aralkyle en $C_7$ à $C_{11}$, $R^2$ ne représente pas un groupe alkyle en $C_1$ à $C_4$, benzyle, allyle ou oxyle et ne représente pas $-CH_2-CH(R^4)OH$, dans lequel $R^4$ représente un atome d'hydrogène, un groupe méthyle ou phényle, ou la tris-(1,2,2,2,6,6-pentaméthyl-4-pipéridyl-butylamino)-1,3,5-triazine, la tris-(1-allyl-2,2,6,6-tétraméthyl-4-pipéridyl-butylamino)-1,3,5-triazine, la tris-(1-benzyl-2,2,6,6-tétraméthyl-4-pipéridyl-butylamino)-1,3,5-triazine, la tris-(1-bêta-hydroxyéthyl-2,2,6,6-tétraméthyl-4-pipéridyl-butylamino)-1,3,5-triazine ou la tris-(1-bêta- hydroxypropyl-2,2,6,6-tétraméthyl-4-pipéridyl-éthylamino)-1,3,5-triazine.

**2.** Polyoléfines selon la revendication 1, caractérisées en ce qu'elles contiennent un composé de formule I, dans laquelle $R^1$ représente un groupe alkyle en $C_4$ à $C_{18}$.

**3.** Polyoléfines selon la revendication 1, caractérisées en ce qu'elles contiennent un composé de formule I, dans laquelle $R^1$ représente un groupe butyle.

**4.** Polyoléfines selon la revendication 1, caractérisées en ce que la quantité du composé de formule I se situe entre 0,01 et 5 % en poids, par rapport au polymère synthétique non traité.

**5.** Polyoléfines selon la revendication 1, caractérisées en ce que le polymère est du polyéthylène à haute ou basse densité ou est du polypropylène.